(19) **Europäisches Patentamt / European Patent Office / Office européen des brevets**

(11) **EP 4 730 786 A1**

(12) **EUROPEAN PATENT APPLICATION**

(43) Date of publication:
**22.04.2026 Bulletin 2026/17**

(21) Application number: **24306704.8**

(22) Date of filing: **16.10.2024**

(51) International Patent Classification (IPC):
**H04N 19/119** (2014.01)    **H04N 19/176** (2014.01)
**H04N 19/467** (2014.01)    **H04N 19/503** (2014.01)
**H04N 19/51** (2014.01)    **H04N 19/52** (2014.01)
**H04N 19/55** (2014.01)    **H04N 19/70** (2014.01)

(52) Cooperative Patent Classification (CPC):
**H04N 19/52; H04N 19/119; H04N 19/176;
H04N 19/467; H04N 19/503; H04N 19/51;
H04N 19/55; H04N 19/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LE LEANNEC, Fabrice**
  **35830 BETTON (FR)**
• **ROBERT, Antoine**
  **35140 MEZIERES SUR COUESNON (FR)**
• **NASER, Karam**
  **35250 MOUAZE (FR)**
• **CHEN, Ya**
  **35700 RENNES (FR)**

(74) Representative: **Interdigital**
**Immeuble ZEN 2**
**845 A, avenue des Champs Blancs**
**35510 Cesson-Sévigné (FR)**

(54) **SUB-BLOCK-BASED TEMPORAL MOTION VECTOR PREDICTION USAGE FOR SMALL BLOCKS**

(57)  A method comprising obtaining video data representing an inter block in merge mode; applying a parsing process to the video data, wherein the parsing process comprises parsing a sub-block-based merge flag indicating that a sub-block merge mode applies to the inter block responsive to a condition is fulfilled (1804), the condition being independent of a size of the inter block.

FIG. 18

**Description**

**BACKGROUND**

The present application is related to the domain of prediction of motion information in video compression.

To achieve high compression efficiency, video coding schemes usually employ predictions and transforms to leverage spatial and temporal redundancies in a video content. During an encoding, pictures of the video content are divided into blocks of pixels, these blocks being then partitioned into one or more sub-blocks, called original sub-blocks in the following. An intra or inter prediction is then applied to each sub-block to exploit intra or inter picture correlations. Whatever the prediction method used (intra or inter), a predictor sub-block is determined for each original sub-block. Then, a sub-block representing a difference between the original sub-block and the predictor sub-block, often denoted as a prediction error sub-block, a prediction residual sub-block or simply a residual block, is transformed, quantized and entropy coded to generate an encoded video stream. To reconstruct the video, the compressed data is decoded by inverse processes corresponding to the transform, quantization and entropic coding.

In first compression methods, a majority of the efforts for improving the compression were targeting the improvement of the prediction of the blocks and an efficient representation of the residual data via transform, quantization and entropy coding. While these aspects were improving, it appeared that an impact of motion information issued from inter prediction was not negligeable in the compression efficiency. Methods based on prediction of the motion information such as the Adaptive Motion Vector Prediction (AMVP) mode and the merge mode were then proposed to reduce their bitrate cost. These methods are continually improving with the appearance of new tools. Two of these new tools are the SbTMVP (Sub-block-based Temporal Motion Vector Prediction) and affine merge. The two new tools are gathered in a same group of tools called Sub-block merge mode. Currently, the usage of motion vector prediction candidates issued from the sub-block merge mode in merge mode depends on block size constraints. These block size constraints are not always justified and harm the compression efficiency.

It is desirable to propose solutions to improve the compression efficiency in case of usage of the sub-block merge mode.

**BRIEF SUMMARY**

In a first aspect, one or more of the present embodiments provide a method comprising:

> obtaining video data representing an inter block in merge mode;
> applying a parsing process to the video data, wherein the parsing process comprises parsing a sub-block-based merge flag indicating that a sub-block merge mode applies to the inter block responsive to a condition is fulfilled, the condition being independent of a size of the inter block.

In an embodiment, responsive to the condition is fulfilled, a process for constructing (1902, 1903) a list of sub-block merge candidates is applied, the sub-block merge list comprising only SbTMVP candidates or SbTMVP candidates and affine merge candidates responsive to a condition based on the size of the inter block.

In an embodiment, the sub-block merge list comprises only SbTMVP candidates responsive to the size of the inter block is below a value.

In an embodiment, responsive to the size of the inter block is below the value and responsive to a single SbTMVP candidate is present in the sub-block merge list, no syntax element representing a sub-block merge index is parsed from the video data and the sub-block merge index is inferred to zero.

In a second aspect, one or more of the present embodiments provide a method comprising:

> obtaining an inter block in whole-block merge mode;
> applying a process for generating list of candidates for prediction of motion information of the inter block comprising:
> adding at least one SbTMVP candidate to the list responsive to a condition based on the size of the inter block.

In an embodiment, the at least one SbTMVP candidate is added to the list responsive to a size of the inter block is below a value.

In an embodiment, the added at least one SbTMVP candidate replaces TMVP candidates in the list.

In an embodiment, a process to check a redundancy between the added at least one SbTMVP candidate and TMVP candidates is applied to cancel redundant SbTMVP candidate from the list.

In an embodiment, responsive to a SbTMVP candidate contains several sub-blocks with different motion vectors, the SbTMVP candidate is transformed into a whole-block based candidate, which contains exactly one motion vector associated to each inter direction.

In an embodiment, the method is applied in a method for encoding video data or in a method for decoding video data.

In a third aspect, one or more of the present embodiments provide a method comprising:

obtaining an inter block to be encoded in merge mode;
applying a signaling process to signal the inter block in video data, wherein the signaling process comprises signaling a sub-block-based merge flag indicating that a sub-block merge mode applies to the inter block responsive to a condition is fulfilled, the condition being independent of a size of the inter block.

In a fourth aspect, one or more of the present embodiments provide a device comprising electronic circuitry adapted for:

obtaining video data representing an inter block in merge mode;
applying a parsing process to the video data, wherein the parsing process comprises parsing a sub-block-based merge flag indicating that a sub-block merge mode applies to the inter block responsive to a condition is fulfilled, the condition being independent of a size of the inter block.

In a fifth aspect, one or more of the present embodiments provide a device comprising electronic circuitry configured for:

obtaining an inter block in whole-block merge mode;
applying a process for generating list of candidates for prediction of motion information of the inter block comprising: adding at least one SbTMVP candidate to the list responsive to a condition based on the size of the inter block.

In a seventh aspect, one or more of the present embodiments provide a device comprising electronic circuitry configured for:

obtaining an inter block to be encoded in merge mode;
applying a signaling process to signal the inter block in video data, wherein the signaling process comprises signaling a sub-block-based merge flag indicating that a sub-block merge mode applies to the inter block responsive to a condition is fulfilled, the condition being independent of a size of the inter block.

In a eighth aspect, one or more of the present embodiments provide a non-transitory information storage medium storing program code instructions for implementing the method according to the first, second or third aspect.

In a ninth aspect, one or more of the present embodiments provide a computer program comprising program code instructions for implementing the method of the first, second or third aspect.

BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1A describes an example of a context in which following embodiments can be implemented;
FIG. 1B is a block diagram illustrating an example system according to one or more embodiments of the present disclosure;
FIG. 2 illustrates an example of partitioning undergone by an image of pixels of an original video;
FIG. 3 is a block diagram illustrating an example video encoder according to one or more embodiments of the present disclosure;
FIG. 4 is a block diagram illustrating an example video decoder according to one or more embodiments of the present disclosure;
FIG. 5A illustrates schematically five spatial positions considered for constructing a list of merge candidates;
FIG. 5B illustrates schematically collocated positions considered for determining the temporal motion vector predictor;
FIG. 6 summarizes a signaling of the inter prediction information according to the HEVC specification;
FIGS. 7A and 7B illustrates a block-based affine transform motion compensation applied to a block;
FIG. 8 illustrates a sub-block based affine transform prediction;

FIG. 9 illustrates neighboring blocks used to derive an affine motion model;

FIG. 10 illustrates a control point motion vector inheritance;

FIG. 11 Locations of Candidates position for constructed affine merge mode;

FIG. 12 represents the spatially neighboring blocks considered in the sub-block temporal motion vector prediction process;

FIG. 13 illustrates an example of a process allowing deriving the sub-block temporal motion vector predictor (SbTMVP);

FIG. 14 illustrates a template matching based method;

FIG. 15 illustrates a principle of a bilateral matching;

FIG. 16 illustrates a known implementation of a bitstream parsing process applied to a block in merge mode;

FIG. 17 illustrates a known implementation of a signaling process applied to a block in merge mode;

FIG. 18 illustrates an implementation of a bitstream parsing process applied to a block in merge mode according to an embodiment;

FIG. 19 details a step of the bitstream parsing process;

FIG. 20 details a step of a signaling process according to an embodiment; and,

FIG. 21 shows a whole-block candidate merge list construction process according to an embodiment.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

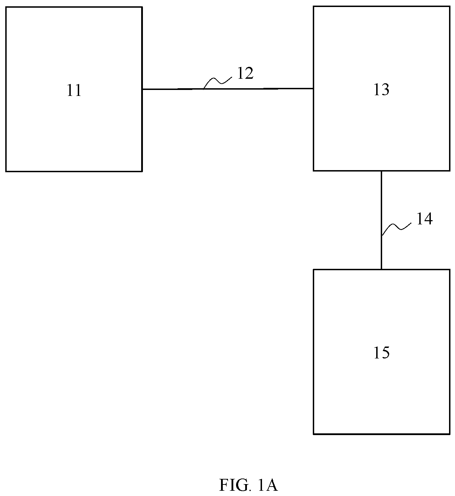

FIG. 1A describes an example of a context in which following embodiments can be implemented.

In FIG. 1A, a system 11, that could be a camera, a storage device, a computer, a server or any device capable of delivering a video stream, transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or 5G) network link.

The system 13, that could be for example a set top box, receives and decodes the video stream to generate a sequence of decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display 15 are comprised in a TV, a computer, a tablet, a smartphone, a head-mounted display, etc.

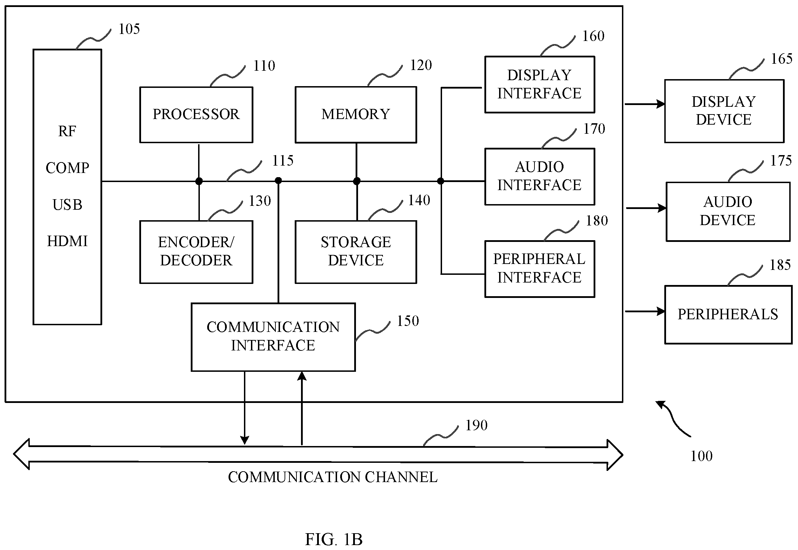

FIG. 1B illustrates an example of system 100 implementing the system 11 or the system 13 in which embodiments of the present disclosure can be implemented.

The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces. All these types of processors are electronic circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process raw video data/encoded video data and to provide encoded video data/decoded video data. The encoder/decoder module 130 may include one or more processors and/or memory (not shown). Although FIG. 1B depicts the encoder/decoder module 130 as a separate element of system 100, it will be understood that the processor 110 and the encoder/decoder module 130 may be collocated and/or integrated together as a combination of hardware and/or software, e.g., in an electronic package, circuitry or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input raw video data, reconstructed video data, decoded video data or portions thereof, bitstreams, chunks, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190 (corresponding to communication channel 12 or 14 in FIG. 1A). The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT (Over The Top) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

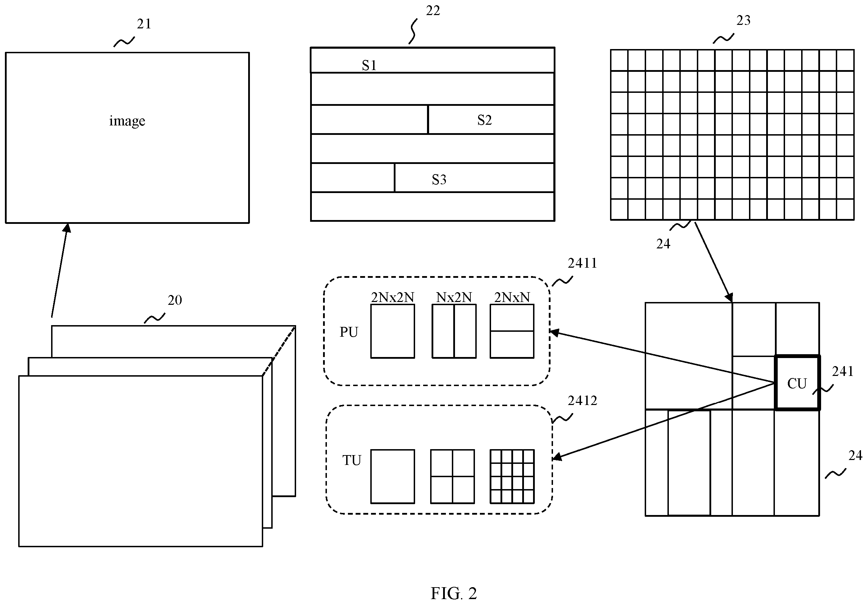

FIGS. 2, 3 and 4 introduce an example of video format.

**FIG. 2** illustrates an example of partitioning undergone by a picture of pixels 21 of an original video sequence 20. It is considered here that a pixel is composed of three components: a luminance component Y and two chrominance components U and V (also denoted herein by Cb and Cr). Other types of pixels are however possible comprising less or more components such as only a luminance component or an additional depth component or transparency component.

A picture is divided into a plurality of coding entities. First, as represented by reference 23 in FIG. 2, a picture is divided in a grid of blocks called coding tree units (CTU). A CTU consists of an N×N block of luminance samples together with two corresponding blocks of chrominance samples. N is generally a power of two. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile.

In the example in FIG. 2, as represented by reference 22, the picture 21 is divided into three slices S1, S2 and S3 of the raster-scan slice mode, each comprising a plurality of tiles (not represented), each tile comprising only one brick.

As represented by reference 24 in FIG. 2, a CTU may be partitioned into the form of a hierarchical tree of one or more sub-blocks called coding units (CU). The CTU is the root (i.e. the parent node) of the hierarchical tree and can be partitioned in a plurality of CU (i.e. child nodes). Each CU becomes a leaf of the hierarchical tree if it is not further partitioned in smaller CU or becomes a parent node of smaller CU (i.e. child nodes) if it is further partitioned.

In the example of FIG. 2, the CTU 24 is first partitioned in "4" square CU using a quadtree type partitioning. The upper left CU is a leaf of the hierarchical tree since it is not further partitioned, i.e. it is not a parent node of any other CU. The upper right CU is further partitioned in "4" smaller square CU using again a quadtree type partitioning. The bottom right CU is vertically partitioned in "2" rectangular CU using a binary tree type partitioning. The bottom left CU is vertically partitioned in "3" rectangular CU using a ternary tree type partitioning.

During the coding of a picture, the partitioning is adaptive, each CTU being partitioned so as to optimize a compression efficiency of the CTU criterion.

In HEVC appeared the concept of prediction unit (PU) and transform unit (TU). Indeed, in HEVC, the coding entity that is used for prediction (i.e. a PU) and transform (i.e. a TU) can be a subdivision of a CU. For example, as represented in FIG. 2, a CU of size 2N×2N, can be divided in PU 2411 of size N×2N or of size 2N×N. In addition, said CU can be divided in "4" TU 2412 of size N×N or in "16" TU of size (N/2)×(N/2).

One can note that in VVC, except in some particular cases, frontiers of the TU and PU are aligned on the frontiers of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

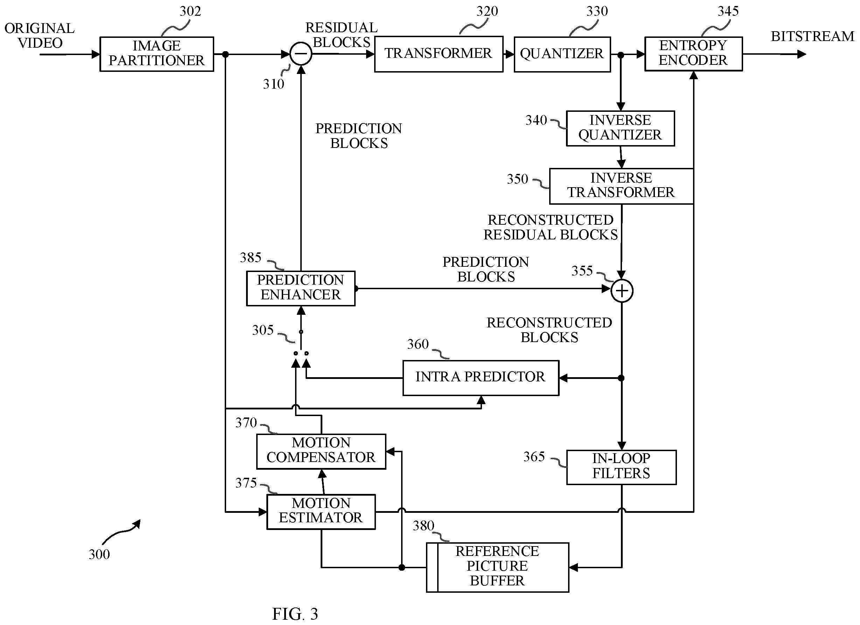

**FIG. 3** is a block diagram illustrating an example video encoder 300 that may be employed by the system 100 (e.g., via the encoder/decoder module 130) described with respect to FIG. 1B. The video encoder 300 may be an encoder that employs video compression technologies, standards, specification, or protocols, including Advanced Video Coding (AVC, ITU-T H.264/MPEG-4), High Efficiency Video Coding (HEVC, ITU-T H.265), Versatile Video Coding (VVC, ITU-T H.266), Essential Video Coding (EVC, MPEG-5), AOMedia Video 1 (AV1), AV2, VP9, or the Enhanced Compression Model (ECM) (Enhanced compression model) as described in document JVET-AH2025: Algorithm description of Enhanced Compression Model 13 (ECM 13) / Joint Video Experts Team (JVET) of ITU-T SG 16 WP 3 and ISOIIEC JTC 1/SC 29, 34th Meeting, Rennes, FR, 17 24 April 2024, and variations or improvements thereof. Those skilled in the art will understand that the various embodiments described herein are not limited to a specific standard and can be applied to other standards and recommendations, as well as extensions thereof.

Referring generally to FIG. 3 and the video encoder 300, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame or picture) to be encoded is partitioned into CUs (blocks, maroblock, CTU, PU, TU, etc) by an image partitioner 302 as described in relation to FIG. 2.

In general, a block includes a luma block and associated chroma blocks. As such, functions of the video encoder 300 described herein as applied to a block refer generally to the luma block and the respective chroma blocks.

A block may be encoded using an intra prediction mode performed by an intra predictor 360. In intra prediction mode, the content of a block in a frame is predicted based on content from one or more other blocks of the same frame (or region), using reconstructed blocks output from an adder 355.

A block may also or alternatively be encoded using an inter prediction mode, in which motion estimation and motion compensation are performed by a motion estimator 375 and a motion compensator 370, respectively. In inter prediction mode, the content of a block in a frame is predicted based on content from one or more reconstructed areas of reference frames, available from a reference picture buffer (or decoded picture buffer (DPB) 380). A position of the reconstructed area (or reference area) in the reference frame is generally indicated by motion information. The motion information here includes an uni-directional or bi-directional temporal prediction type, a reference picture index within each reference picture list and (a) motion vector(s). Said motion information is used during the motion compensation 370 during which a residual block is calculated in the form of a difference between a predicted block and the reference area. One can note that for blocks predicted using a bi-directional temporal prediction (i.e., bi-predicted block), two reference areas are used to predict the block, each reference area being identified by its own motion information.

Two processes are employed to encode the motion information: AMVP (Adaptive Motion Vector Prediction) or Merge. In each process, the motion vectors are predicted.

In an implementation of the **AMVP** mode, for each motion information of a block, a motion vector predictor (MVP) is selected, and a motion vector difference noted MVd between the selected MVP and a motion vector of the motion information is computed. The MVP is selected in a list of AMVP candidates made of "2" candidates. The index of the chosen MVP and the MVd are then encoded by the entropic encoder during step 345 along with the transformed and quantized residual block resulting from the inter prediction of the current block.

The AMVP candidate list is constructed first by deriving a first spatial candidate from a left block neighbouring the current block, if this block is available and inter coded. Then a second spatial candidate is derived from a top block neighbouring the current block, if this block is available and inter coded. Then, a temporal candidate is derived from the reference picture considered for the current block at a position collocated with the current block, if an inter block exist at this collocated position. Each derived MVP candidate is scaled according to a temporal distance between the reference picture associated to this MVP candidate and the reference picture considered for the current block. A redundancy check is then conducted between derived spatial candidates and, if a duplicate candidate exists, this candidate is discarded. The final AMVP candidate list contains the two first derived MVP candidates. If less than "2" MVP candidates are obtained through the above process, then the AMVP candidate list is completed with zero motion vectors.

The **merge** mode consists in deriving motion information of a current block from a selected motion information predictor candidate. The motion information considered here includes all the inter prediction parameters of a block, that is to say: the uni-directional or bi-directional temporal prediction type, the reference picture index within each reference picture list and the motion vector(s). The selected motion information predictor candidate (i.e., the merge candidate) is selected in a list of motion information predictor candidates (i.e., in a list of merge candidates). When a block is encoded in merge mode, the index of the selected merge candidate is encoded. If no residual block is encoded for the current block, the current block is considered as encoded according to a particular merge mode called *skip* mode.

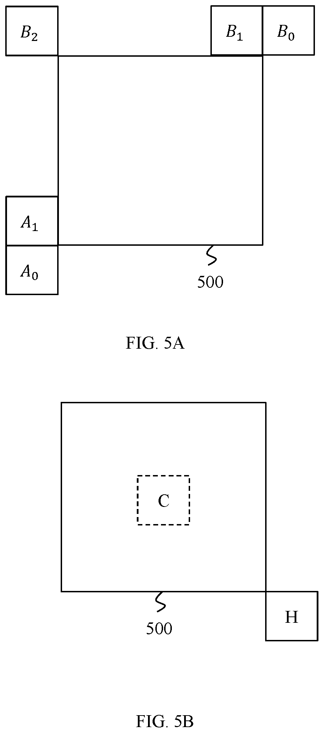

In some implementations, the list of merge candidates is made of "5" merge candidates. Up to "5" spatial positions are considered to retrieve some potential candidates for the list of merge candidates. **FIG. 5A** illustrates schematically the five spatial positions considered for constructing a list of merge candidates for a block 500. These positions are investigated according to the following order:

    1. Left (A1)
    2. Above (B1)
    3. Above right (B0)
    4. Left bottom (A0)
    5. Above left (B2)

Each spatial candidate is introduced in the list of merge candidates provided that the motion information corresponding to this candidate is not already present in the list of merge candidates. At this stage, up to "4" spatial candidates are selected.

Then a temporal predictor noted TMVP is determined. **FIG. 5B** illustrates schematically collocated positions considered for determining the TMVP. The determination of the TMVP consists first in investigating position H and, if no motion information is available at position H, the position C is investigated. A scaling may be applied to the obtained motion information to obtain the TMVP.

A last pruning process is then applied to ensure that the set of spatial and temporal candidates does not contain redundant candidates.

In case of a B-slice (slice allowing bi-predicted blocks), candidates of another type, called combined candidates, are introduced in the list of merge candidates if this list is not full. This consists in forming a candidate made of the motion information associated to one reference picture list (L0) from one candidate already present in the merge list, with the motion associated to the other reference picture list (L1) from another candidate already present in the merge list.

Finally, if the merge list is still not full then zero motion vectors are introduced in at the end of the merge list until it is full.

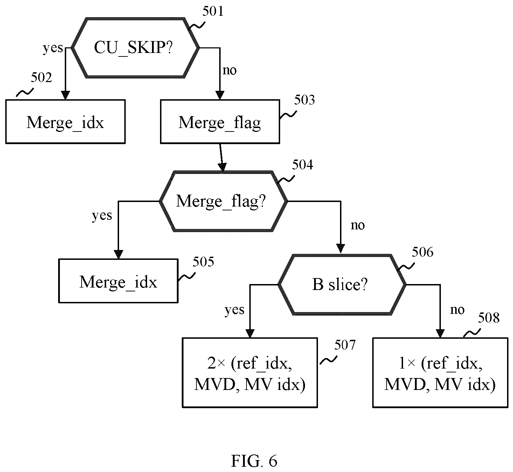

**FIG. 6** summarizes a signaling of the inter prediction information according to the HEVC specification.

As can be seen in 501, the signaling of inter prediction information in HEVC starts by a signaling of a flag CU_SKIP. The flag CU_SKIP indicates if a block is coded in skip mode or not.

If yes, the flag CU_SKIP is followed (502) by a syntax element Merge_idx indicating an index of a motion vector predictor.

If no, the flag CU_SKIP is followed (503) by a flag Merge_flag. The flag Merge_flag indicates whether the block is in merge mode or in AMVP mode.

If the block is in merge mode, the flag Merge_flag is followed (505) by a syntax element Merge_idx.

If the block is not in merge mode (the block is in AMVP mode), the flag Merge_flag is followed by either one or two sets of syntax elements, each set comprising a reference picture index, a motion vector difference and a motion vector predictor index.

Recently, the representation of the motion information has slightly evolved with the apparition of two main categories of motion representation: the whole-block-based motion representation and the sub-block-based motion representation.

The **whole-block-based motion representation** consists in assigning one set of motion information, made of one or two motion vectors and associated reference picture(s) to an inter block. Thus, the motion information of that block is represented under the form of one or two motion vectors for the whole block and a reference picture associated to each motion vector.

**Sub-block-based motion coding representation** typically consists in dividing a block into 4x4 or 8x8 luma samples sub-blocks and assigning an individual set of motion information (one or two couples of a motion vector and a reference picture) to each sub-block.

While in previous implementations of AMVP only spatial candidates, temporal candidates and the zero-motion vector candidate were considered for constructing the list of AMVP candidates, a new category of candidates, called HMVP (History-Based Motion Vector Prediction) candidates, was added in AMVP implementations adapted to the whole block-based motion representation.

A principle of HMVP candidates is to use previously coded motion vectors as MVPs. These motion vectors are associated with adjacent or non-adjacent blocks relative to a current block. To do so, a table of HMVP candidates (i.e., HMVP table) is maintained and updated on the fly, as a first-in-first-out (FIFO) buffer of MVPs. There are up to five candidates in the HMVP table. After coding one inter predicted block, provided that this block is not in sub-block mode (including affine mode) or GPM (geometric partition mode), the HMVP table is updated by appending the inter predicted block motion information to the end of the HMVP table as a new HMVP candidate. In addition to the usual FIFO rule, a mechanism to remove redundant HMVP candidates is applied. One can note that the HMVP table is reset at each CTU row to enable parallel processing.

In recent implementations of the merge mode adapted to the whole-block-based representation, the list of merge candidates was modified and three new merge modes were introduced.

The list of merge candidates is constructed with the following types of candidates:

- Spatial candidates.
- Temporal candidates.
- HMVP candidates. Several HMVP candidates are inserted into the list of merge candidates so that the list reaches a maximum allowed number of merge candidates minus 1.
- Pairwise Average candidates. Up to one pairwise average candidate (or more simply pairwise candidate) is added to the list of merge candidates. Pairwise candidates are computed as follows: The two first merge candidates present in the list of merge candidates are considered and their motion vectors are averaged. This averaging is computed separately for each reference picture list. If each of the two first merge candidates are bi-prediction ones, motion vectors related to both lists L0 and L1 are averaged. If only one motion vector is present, it is taken as is to form the pairwise candidate.
- Zero motion vector candidate.

The three new merge modes comprise MMVD (Merge Mode with motion vector Difference), GPM (Geometric Partitioning Mode) and CIIP (Combined IntraInter Prediction). These new modes are detailed in document JVET-T2002-v2: Algorithm description for Versatile Video Coding and Test Model 11 (VTM 11), Joint Video Experts Team (JVET) of ITU-T SG 16 WP 3 and ISOIIEC JTC 1/SC 29, 20th Meeting, by teleconference, 7 - 16 October 2020, Jianle Chen, Yan Ye, Seung Hwan Kim.

MMVD can be viewed as a king of merge mode in which a merge candidate is refined by a *MVd*. In MMVD, after a merge candidate is selected, it is further refined by a signalled *MVd* information. The signalling of a MMVD mode comprises a merge candidate flag, an index to specify a motion magnitude and an index indicating a motion direction. The merge candidate flag is signalled to specify which one is used between the first and second merge candidates. The index specifying a motion magnitude and the index indicating a motion direction allow signaling a limited number of motion vector differences (*MVd*) on top of a signaled merge candidate, i.e., "4" vector directions and "8" magnitude values.

As video compression standards evolve, the family of inter modes has grown significantly and comprises now many different inter modes.

For instance, it had been observed that a translational motion model cannot represent accurately motions such as zoom in/out, rotation, perspective motions and other irregular motions. To deal with this issue, in some implementations, a block-based affine transform motion compensation prediction had been proposed.

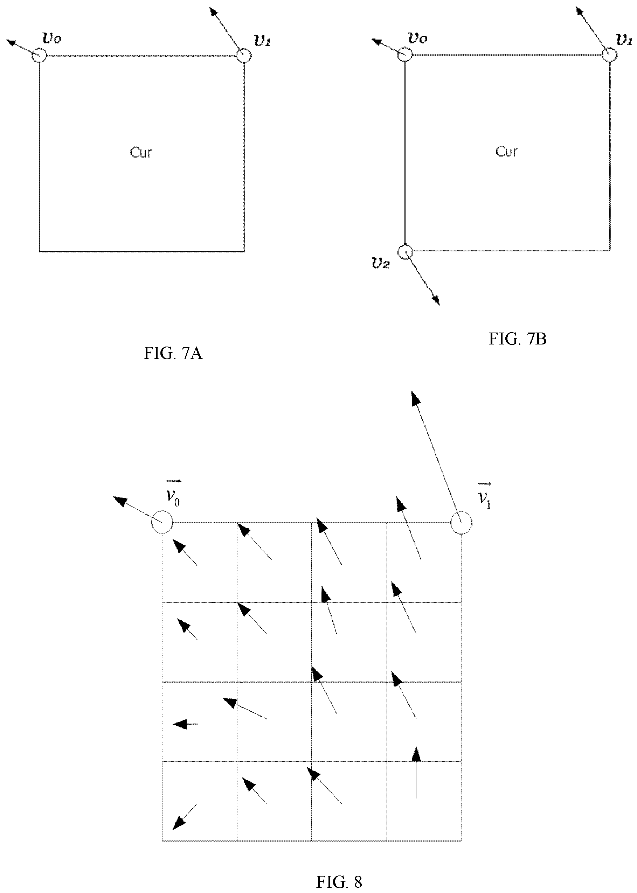

**FIGS. 7A** and **7B** illustrates a **block-based affine transform motion compensation** applied to a current block *Cur.* As shown in FIGS. 7A and 7B, an affine motion field of the current block *Cur* is described by motion information of two control point motion vectors (CPMVs) (4-parameter) in FIG. 7A or three control point motion vectors (6-parameter) in FIG. 7B.

For the 4-parameter affine motion model, a motion vector at sample location (*x, y*) in the current block *Cur* is derived as follows:

$$\begin{cases} mv_x = \frac{mv_{1x}-mv_{0x}}{W}x + \frac{mv_{0y}-mv_{1y}}{W}y + mv_{0x} \\ mv_y = \frac{mv_{1y}-mv_{0y}}{W}x + \frac{mv_{1x}-mv_{0x}}{W}y + mv_{0y} \end{cases} \qquad \text{Eq. 1}$$

For the 6-parameter affine motion model, the motion vector at the sample location (*x, y*) in the current block *Cur* is derived as follows:

$$\begin{cases} mv_x = \frac{mv_{1x}-mv_{0x}}{W}x + \frac{mv_{2x}-mv_{0x}}{H}y + mv_{0x} \\ mv_y = \frac{mv_{1y}-mv_{0y}}{W}x + \frac{mv_{2y}-mv_{0y}}{H}y + mv_{0y} \end{cases} \qquad \text{Eq. 2}$$

Where *(mv_{0x}, mv_{0y})* is a motion vector at a top-left corner control point of the current block, *(mv_{1x}, mv_{1y})* is a motion vector at a top-right corner control point of the current block, and *(mv_{2x}, mv_{2y})* is a motion vector of a bottom-left corner control point of the current block.

In order to simplify the motion compensation prediction, a sub-block based affine transform prediction had been proposed.

**FIG. 8** illustrates a **sub-block based affine transform prediction.** To derive a motion vector for each 4×4 luma sub-block of a current block, a motion vector of a center sample of each sub-block is calculated according to equations Eq. 1 or Eq. 2 and rounded to 1/16 fraction accuracy. Then, motion compensation interpolation filters are applied to generate the prediction of each sub-block with the derived motion vector. The sub-block size of chroma-components is also set to be 4×4. The motion vector of a 4×4 chroma sub-block is calculated as the average of the motion vectors of the top-left and bottom-right luma sub-blocks in a collocated 8x8 luma region.

As done for translational motion inter prediction, there are also two affine motion inter prediction modes: affine merge mode and affine AMVP mode.

The **affine merge mode** can be applied for blocks with both width and height larger than or equal to "8". In the affine merge mode, control point motion vectors (CPMVs) of a current block are generated based on the motion information of spatial neighboring blocks. There can be up to five CPMV predictor (CPMVP) candidates and an index is signalled to indicate the one to be used for the current block. The following three types of CPMV candidates are used to form a list of affine merge candidates: Inherited affine merge candidates extrapolated from the CPMVs of the neighbour affine blocks; Constructed affine merge candidates CPMVPs that are derived using the translational motion vectors of the neighbour blocks; Zero motion vectors.

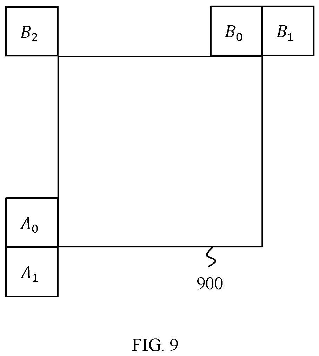

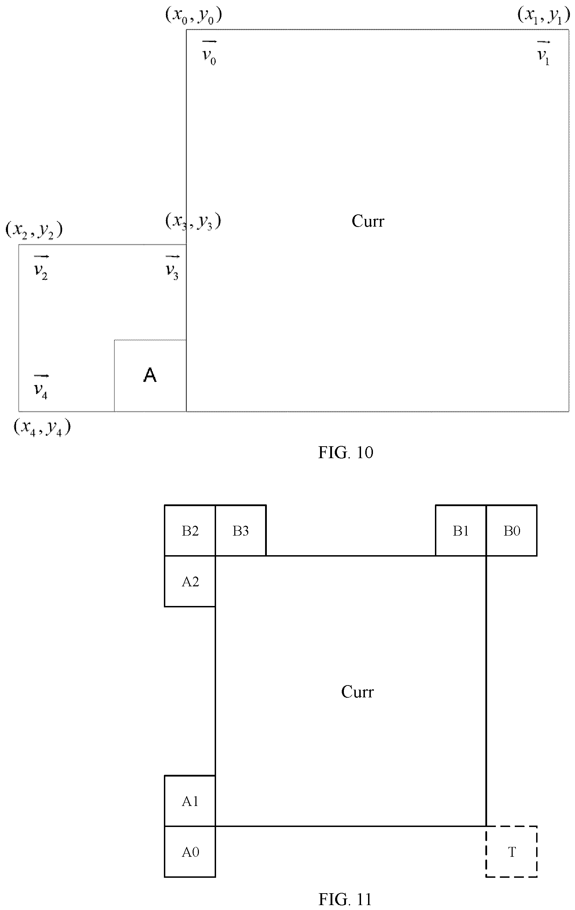

In some implementations, there are maximum two **inherited affine candidates** (or inherited affine merge candidate) which are derived from affine motion model of the neighboring blocks, one from left neighboring blocks and one from above neighboring blocks. The neighboring blocks used to derive the affine motion model are shown in **FIG. 9.** For the left predictor, the scan order is A0->A1, and for the above predictor, the scan order is B0->B1->B2. Only the first inherited candidate from each side is selected. No pruning check is performed between two inherited candidates. When a neighboring affine block is identified, its CPMVs are used to derive the CPMVP candidate in the affine merge list of the current block. As shown in **FIG. 10,** if the neighbour left bottom block A is coded in affine mode, the motion vectors $v_2$, $v_3$

and $v_4$ of the top left corner, above right corner and left bottom corner of a block which contains the block A are attained. When block A is coded with a 4-parameters affine model, the two CPMVs of the current block are calculated according to $v_2$ and $v_3$. In case that block A is coded with a 6-parameters affine model, the three CPMVs of the current CU are calculated according to $v_2$, $v_3$ and $v_4$.

**Constructed affine candidate** (or constructed affine merge candidate) means the candidate is constructed by combining the neighbor translational motion information of each control point. The motion information for the control points is derived from specified spatial and temporal neighbors represented in **FIG. 11.** $CPMV_k$ (k=1, 2, 3, 4) represents the k-th control point. For CPMV i, the B2->B3->A2 blocks are checked and the motion vector of the first available block is used. For $CPMV_2$, the B1->B0 blocks are checked and for $CPMV_3$, the A1->A0 blocks are checked. TMVP is used as $CPMV_4$ if it's available.

After motion vectors of four control points are attained, affine merge candidates are constructed based on this motion information. The following combinations of control point MVs are used to construct in order: $\{CPMV_1, CPMV_2, CPMV_3\}$, $\{CPMV_1, CPMV_2, CPMV_4\}$, $\{CPMV_1, CPMV_3, CPMV_4\}$, $\{CPMV_2, CPMV_3, CPMV_4\}$, $\{CPMV_1, CPMV_2\}$, $\{CPMV_1, CPMV_3\}$

The combination of three CPMVs constructs a 6-parameters affine merge candidate and the combination of 2 CPMVs constructs a 4-parameters affine merge candidate. To avoid motion scaling process, if the reference indices of control points are different, the related combination of control point MVs is discarded.

After inherited affine candidates and constructed affine candidate are checked. If the list is still not full, zero motion vectors are inserted to the end of the list.

**Affine AMVP mode** can be applied for CUs with both width and height larger than or equal to "16". An affine flag at CU level is signaled in the bitstream (i.e., in video data) to indicate the use of affine AMVP mode. Another flag signals if 4-parameter affine or 6-parameter affine model is used. In affine AMVP mode, the difference of the CPMVs of current CU and their predictors CPMVPs (Control Point Motion Vector Predictors) is coded.

The CPMVPs used to predict the CPMV of a CU are taken from an affine AMVP candidate list made of "2" elements. The affine AMVP candidate list is constructed using the following four types of CPVM candidate in order: Inherited affine AMVP candidates extrapolated from the CPMVs of the neighbor CUs; Constructed affine AMVP candidates CPMVPs that are derived using the translational MVs of the neighbor CUs; Translational MVs from neighboring CUs; Zero MVs.

In the following the term checking is used. Checking a potential candidate means checking that a valid Affine AMVP or Affine merge candidate to predict the current CU's affine CPMVs is available and is valid, and if so, add it to the candidate list under construction.

The checking order of inherited affine AMVP candidates is same to the checking order of inherited affine merge candidates. The only difference is that, for AVMP candidate, only the affine CU that has the same reference picture as in current block is considered. No pruning process is applied when inserting an inherited affine motion predictor into the candidate list.

Constructed affine AMVP candidate is derived from the specified spatial neighbors shown in FIG. 11. The same checking order is used as in affine merge candidate construction. In addition, reference picture index of the neighboring block is also checked. The first block in the checking order that is inter coded and has the same reference picture as in current CUs is used.

When the current CU is coded with 4-parameter affine mode, and $mv_0^{\square}$ and $mv_1^{\square}$ are both available, they are added as one candidate in the affine AMVP list. When the current CU is coded with 6-parameter affine mode, and all three CPMVs are available, they are added as one candidate in the affine AMVP list. Otherwise, constructed AMVP candidate is set as unavailable.

If affine AMVP list of candidates is still less than "2" after valid inherited affine AMVP candidates and constructed AMVP candidate are inserted, $mv_0^{\square}$, $mv_1^{\square}$ and $mv_2^{\square}$ are added, in order, as the translational MVs to predict all control point MVs of the current CU, when available. Finally, zero MVs are used to fill the affine AMVP list if it is still not full.

In addition, some implementations proposed a **sub-block merge/skip mode.**

The sub-block merge/skip mode of these implementations is a merge mode using a merge candidate list of at most "5" elements with only sub-block-based motion candidates, called sub-block merge list. As for regular merge, a merge index indicates the sub-block-based merge candidate used to derive the motion data of a block. This sub-block-based merge list is made of a SbTMVP (Sub-block-based Temporal Motion Vector Prediction) candidate and affine merge candidates.

The SbTMVP (Sub-block-based Temporal Motion Vector Prediction) candidate is put at first place. Similar to the temporal motion vector prediction (TMVP), SbTMVP uses the motion field in the collocated picture to improve motion vector prediction and merge mode for blocks in the current picture. The same collocated picture used by TMVP is used for SbTVMP. The SbTMVP differs from a regular TMVP (RTMVP) in the following two main aspects: the RTMVP predicts motion at block level while the SbTMVP predicts motion at sub-block level; whereas the RTMVP is derived from a collocated block in the collocated picture, the position of the current block is first shifted before deriving the SbTMVP from a block collocated with the shifted position of the current block of the collocated picture. The shift, called *motion shift* in the following, is obtained from a motion vector of a block spatially neighboring the current block.

The affine merge candidates are put in the sub-block-based merge list after the SbTMVP candidate.

As a result, the sub-block-based merge list is constructed with the following list of candidates: SbTMVP; Inherited affine merge candidates; Constructed affine merge candidates CPMVPs that are derived using the translational MVs of the neighbor blocks; Zero MVs.

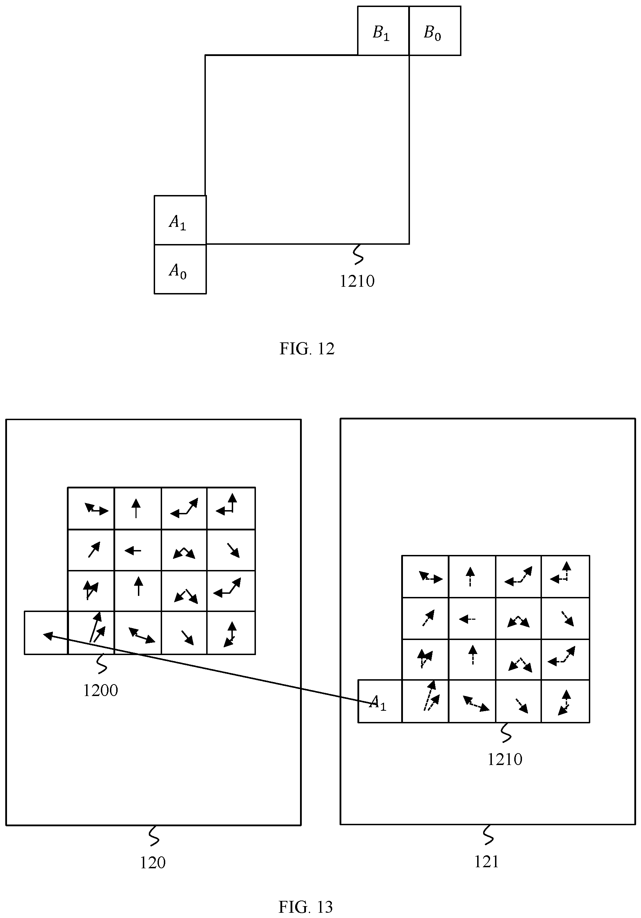

**FIG. 13** illustrates an example of a process allowing deriving the sub-block temporal motion vector predictor (SbTMVP).

The sub-block motion vector prediction predicts the motion vectors of sub-blocks within a current block 1210 of a current picture 121 in two steps:

- In the first step, blocks spatially neighboring the current block 1210 are examined. **FIG. 12** represents the spatially neighboring blocks considered in the sub-block temporal motion vector prediction process. As can be seen in FIG. 12, four blocks are considered, two blocks A1 and A0 located on the bottom left corner of the current block 1210 and two blocks B1, B0 located at the upper right corner of the current block 1210. The spatially neighboring blocks are examined in the order A1, B1, B0 and A0. In this order, as soon as a spatially neighboring block having a motion vector pointing to the collocated picture 120 is identified, this motion vector is selected to be the motion shift to be applied. If no such motion vector is identified from the spatially neighboring blocks A1, B1, B0 and A0, then the motion shift is set to (0, 0), i.e. no motion.
- In the second step, the motion shift identified in the first step is applied to the position of the current block 1210 (i.e. added to the current block 1210 coordinates). Then, sub-block-level motion data (motion vectors and reference indices) are derived from a current block 1200 of the collocated picture 120 collocated with the shifted position of the current block 1210. In the example of FIG. 13, the motion shift is assumed to be set to the motion of block A1. For each sub-block of the current block 1210, the motion data of its corresponding sub-block (the smallest motion grid that covers the center sample) in the block 1200 is used to derive the motion data for said sub-block of the current block 1210. The SbTMVP derivation is then finalized by applying a temporal motion vector scaling to the motion vectors derived for each sub-block to align the reference pictures of these derived motion vectors to that of the current block 1210. For each sub-block, the scaled motion vector is used as a motion vector for the sub-block.

The sub-block size used in SbTMVP is generally 8x8. In that case, SbTMVP mode is only applicable to blocks having a width and a height larger than or equal to "8".

One can note that in recent implementations, the MMVD tool was extended to sub-block merge mode. It consists in a motion vector offset that can be added to the control point motion vector of the affine merge candidate assigned to a block coded in sub-block-merge mode, if the merge candidate is in affine type (as opposed to SbTMVP type).

In order to further improve the compression efficiency of the motion information, some implementations reduce the bitrate of the motion information by letting decoders determining a part of said motion information. For instance, it is proposed to let a decoder refining the motion information. To keep the consistency between the encoder and the decoder, processes applied on the decoder side are replicated identically on the encoder side.

Some methods allowing refining the motion information are based on template matching.

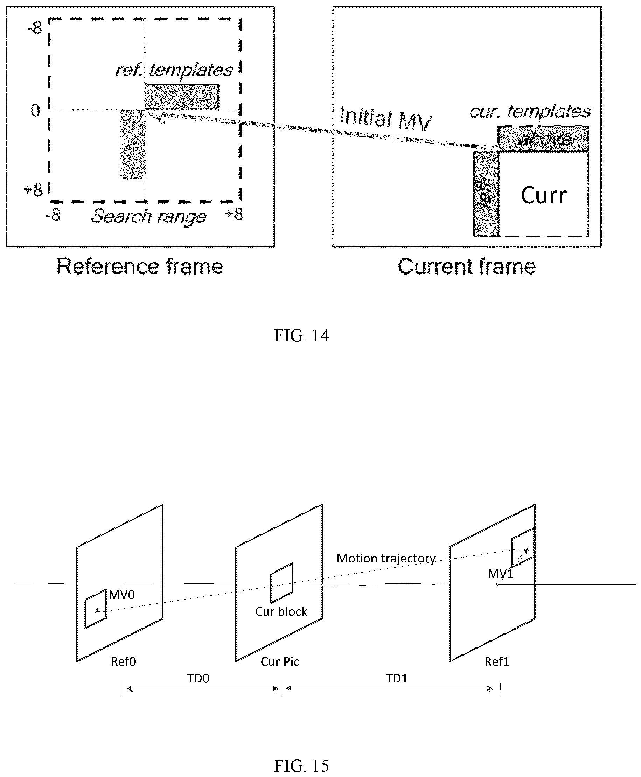

**Template matching** (TM) is a decoder-side motion vector derivation method to refine the motion information of a current block by finding a closest match between a template (i.e. a set of reconstructed samples) neighboring the current block in the current picture and a reference template in a reference picture. **FIG. 14** illustrates a template matching based method. As illustrated in FIG. 14, a better motion vector is searched around an initial motion vector of a current block *Curr* within a [-8, +8]-pel search window.

In recent implementations, the TM technique is also used to determine some MVP candidates in regular AMVP and regular merge modes. In particular, in AMVP, the MVP candidates are determined according to a template matching error. The MVP candidate with minimum TM cost is selected and further refined through TM.

Recent advances in the representation of inter prediction data have seen the appearance of a new tool called **Bilateral matching AMVP-merge mode** (BM-AMVP-merge).

This tool basically consists in an AMVP motion predictor in one inter direction, i.e. associated to one reference picture list, and a merge mode in the opposite direction, i.e. associated to the other reference picture list.

This motion vector refinement mode is allowed in the case where the selected merge predictor and the AMVP predictor are such that there is at least one reference picture available in the past and one reference picture available in the future.

AMVP part of the mode is signaled as a regular uni-directional AMVP, i.e. reference index and MVD are signaled, and it has a derived MVP index if template matching is used or MVP index is signaled when template matching is disabled.

For AMVP direction (i.e. reference picture list) LX, X can be "0" or "1", the merge part in the other direction (1 - LX) is implicitly derived by minimizing the bilateral matching (BM) cost between the AMVP predictor and a merge predictor, i.e. for a pair of the AMVP and a merge motion vectors. For every merge candidate in the merge candidate list which has that other direction (1 - LX) motion vector, the bilateral matching cost is calculated using the merge candidate MV and the AMVP MV. The merge candidate with the smallest cost is selected. The bilateral matching refinement is applied to the coding block with the selected merge candidate MV and the AMVP MV as a starting point.

We explain below the principle of the bilateral matching motion vector refinement.

In some implementations of bi-prediction operations, a refined MV is searched around two initial MVs (MV0 and MV1) in reference picture lists L0 and L1, as illustrated by **FIG. 15.** The refined MVs are derived around the initial MVs based on a minimum bilateral matching (BM) cost between the two reference blocks in L0 and L1.

BM performs a local search to derive integer sample precision *intDeltaMV.* The local search applies a 3×3 square search pattern to loop through a search range [-sHor, sHor] in horizontal direction and [-sVer, sVer] in vertical direction.

The bilateral matching cost is calculated as: *bilCost = mvDistanceCost + sadCost,* where *mvDistanceCost* is representative of the motion vector coding cost and increases as a function of the MV magnitude. When the *bilCost* at the center point of the 3×3 search pattern has the minimum cost, the *intDeltaMV* local search is terminated. Otherwise, the current minimum cost search point becomes the new center point of the 3×3 search pattern and continue to search for the minimum cost, until it reaches the end of the search range.

A fractional sample refinement is further applied to derive the final *deltaMV.* The refined MVs after the first pass is then derived as:

$$MV0\_pass1 = MV0 + deltaMV$$

$$MV1\_pass1 = MV1 - deltaMV$$

The BM-AMVP-merge mode presented above, also called MVP-merge mode, was initially only proposed for B pictures which have at least one reference picture in the past and at least one reference picture in the future, in terms of picture display order.

Recently, it was proposed to activate the AMVP-Merge mode introduced above in low-delay pictures. An inter coded picture is said to be low-delay if its both reference pictures are in the past of current picture.

The video encoder 300 selects or otherwise determines at 305 which prediction mode (intra prediction mode and/or inter prediction mode) to use for encoding a CU. The selection is generally based on a rate/distortion optimization criterion (i.e. RDO criterion). The selected prediction mode may be enhanced (e.g., filtered) by a prediction enhancer 385. Based on the selected mode, a prediction for the CU is generated. A residual block is determined based on the prediction (i.e., prediction block, predicted CU) and the input CU. In some embodiments, such determination is made by a subtractor 310.

The residual block or a partition thereof (e.g., a transform block) is transformed into transform coefficients by a transformer 320. The transform coefficients are quantized by a quantizer 330. An entropy encoder 345 performs entropy encoding of the quantized transform coefficients and coding parameters (e.g., syntax elements including motion vectors and other control data) to form a bitstream of coded video data.

In addition to coding the original video blocks as described herein, the video encoder 300 reconstructs the coded blocks to provide references for future predictions. Thus, quantized transform coefficients (from the quantizer 330) are de-quantized by an inverse quantizer 340, and inverse transformed by an inverse transformer 350, to reconstruct (decode) the residual blocks. The reconstructed residual blocks and prediction blocks are combined (e.g., by the adder 355) to form reconstructed blocks. Thus, the video encoder 300 performs decoding operations through which the encoded images (frames) are reconstructed.

In-loop filters 365 may be applied to the reconstructed image (formed by the reconstructed blocks). The filtered reconstructed image(s) are stored in the DPB 380 and used by the motion estimator 375 and motion compensator 370, as explained above. The in-loop filters 365 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

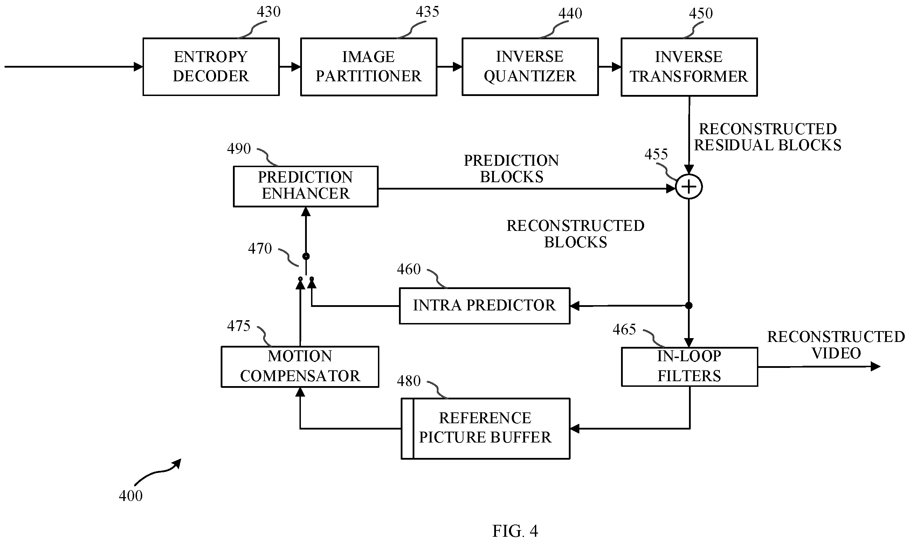

FIG. 4 is a block diagram illustrating an example of video decoder 400 that may be employed by the system 100 (e.g., via the encoder/decoder module 130) described with respect to FIG. 1B. Generally, operational features of the video decoder 400 are reciprocal to operational features of the video encoder 300. In the video decoder 400, a coded video bitstream (e.g., generated by the video encoder 300 or another video encoding device or process) is entropydecoded by an entropy decoder 430 to obtain transform coefficients, motion vectors, and other coding parameters. Based on the coding parameters, an image partitioner 435 divides the picture accordingly. The quantized transform coefficients are de-quantized by an inverse quantizer 440 and inverse transformed by an inverse transformer 450 to decode (reconstruct) respective residual blocks. =Depending on the selected prediction mode, a predicted block can be obtained at 470 from an intra predictor 460 (i.e., intra prediction) or from a motion compensator 475 (i.e., inter prediction) and may be enhanced (e.g., filtered) by a prediction enhancer 490, generating a prediction block. The reconstructed residual blocks are combined with prediction blocks (e.g. by an adder 455), resulting in reconstructed blocks.

In-loop filters 465 (e.g., DBF, BIF, SAO, and/or ALF) can be applied to the reconstructed image (formed by the reconstructed blocks), to output reconstructed (decoded) video. The filtered reconstructed image is also stored in a reference picture buffer 480 for reference by the motion compensator 475.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 3. The post-decoding processor can use metadata derived by the pre-encoding processor and/or signaled in the video bitstream.

In last implementations of video codecs, sub-block merge mode includes affine merge mode and SbTMVP mode. A block size restriction of sub-block merge mode is specified as "cbWidth >= 8 && cbHeight >= 8". In other words, the sub-block merge mode is allowed only for block with a width and a height higher than "8".

In document "Non-EE2: On sub-block merge mode ", Fan Wang, Yue Yu, Haoping Yu, Dong Wang, OPPO, 35th Meeting, Sapporo, JP, 12-19 July 2024, *document JVET-AI0169"* called simply JVET-AI0169 in the following, it is proposed to extend the usage of sub-block merge mode. The block size restriction is modified to allow more blocks on which the sub-block merge mode can be applied.

To do so, it is proposed in JVET-AI0169 to modify the block size restriction of sub-block merge mode as "cbWidth × cbHeigh >= 32". With this modification, blocks of size 4×8, 4×16, 4×32... and 8×4, 16×4, 32×4... can use the sub-block merge mode.

The solution proposed in JVET-AI0169 allows improving the compression efficiency. However, it is possible to go further than JVET-AI0169 to further improve the performance of the inter-coding.

The following embodiments allow a usage of SbTMVP motion vector prediction mode in a less restricted way than in existing implementation. In particular, it is proposed to decouple the restrictions on SbTMVP and the restriction of affine mode in the merge mode.

Indeed, the usage of affine motion compensation is restricted down to block sizes 4x8 or 8x4 in contribution JVET-AI0169, because at least "2" different control point motion vectors, obtained at two corners of the considered block, are necessary to represent an affine motion field of considered block.

However, such technical restriction is not technically justified for the case of SbTMVP mode, where a single motion vector can be associated to the considered block.

As a consequence, it is proposed to remove the block size restriction on the usage of SbTMVP merge mode, which is currently forbidden for blocks smaller than 8x8 and block area smaller than "32" luma samples in some implementations.

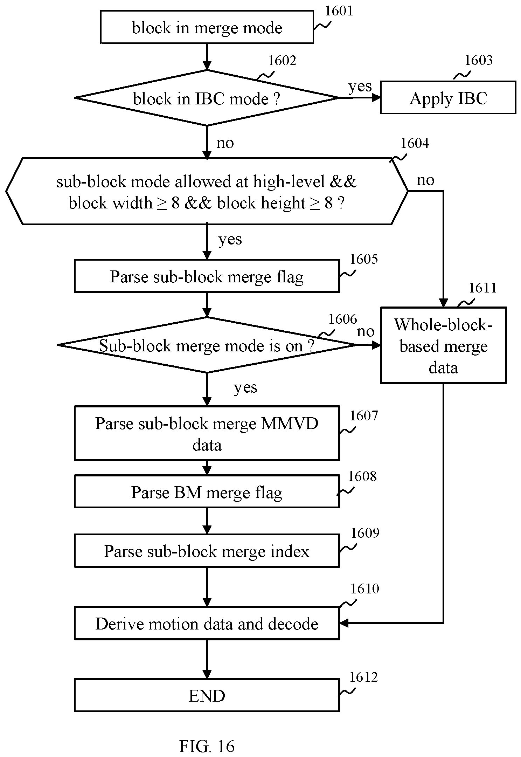

**FIG. 16** illustrates a known implementation of a bitstream parsing process applied to a block in merge mode.

The process of FIG. 16 is for instance executed by the decoder 130 of the system 100 when the system 100 implements the system 13. The decoder 130 implements for instance the decoding process illustrated in FIG. 4.

In a step 1601, the decoder 130 obtains a target block in merge mode.

In a step 1602, the decoder 130 checks if the target block is in IBC (Intra Block Copy) mode. If yes, the decoder applies in a step 1603 a process for decoding a block encoded in IBC mode to the target block.

If no, step 1602 is followed by a step 1604.

In step 1604, the decoder 130 determines if the sub-block merge mode is allowed for the target block. This test is true if the following conditions are true: Sub-block-mode is allowed at high-level, i.e. at picture header level, the maximum number of sub-block-based merge candidates is non-zero; The block size is at least equal to "8" in width and height in terms of the number of luma samples. Note that in JVET-AI0169, a minimum size is fixed to "32" luma samples, thus including 4x8 and 8x4 blocks.

If the sub-block merge mode is not allowed for the target block, step 1604 is followed by a step 1611. During step 1611, the decoder 130 executes a whole-block-based merge data parsing process (not detailed here).

If the sub-block merge mode is allowed for the target block, step 1604 is followed by a step 1605.

During step 1605, the decoder 130 parses a sub-block-based merge flag. If the sub-block-based merge flag indicates that the sub-block merge mode doesn't apply to the target block, step 1605 is followed by step 1611 already explained.

If the sub-block-based merge flag indicates that the sub-block merge mode applies to the target block, the decoder 130 parses a syntax element representing a sub-block-based MMVD (Merge Motion Vector with Difference).

In a step 1608, the decoder 130 parses a bilateral matching (BM) merge flag. The BM merge flag indicates if the merge candidate selected for the target block is about to be refined through a bilateral matching procedure.

In a step 1609, the decoder 130 parses a syntax element representing a sub-block-based merge index. The sub-block-based merge index indicates which sub-block-based merge candidate is used to represent the target block's motion information.

In a step 1610, once all the merge data is parsed from the bitstream, the decoder 130 is able to know which merge list (among the sub-block-based and whole-block-based merge lists) and which merge candidate in that list are used to derive the motion information of target block. The decoder 130 decodes the target block using the merge candidate.

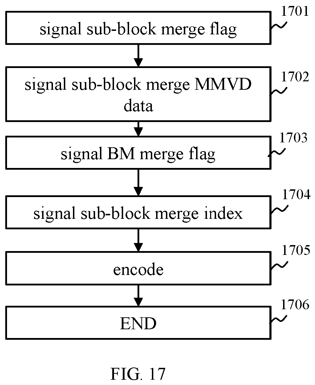

**FIG. 17** illustrates a known implementation of a signaling process applied to a target block in merge mode.

A symmetric process is applied by the encoder 130 of the system 100, for instance, when the system 100 implements the system 11. The encoder 130 implements for instance the encoding process illustrated in FIG. 3.

During this process, once the encoder 130 has determined that a target block is not encoded IBC mode and that the conditions of step 1604 are fulfilled, if the encoder 130 determines that the sub-block merge mode applies to the target block, in a step 1701, the encoder 130 encodes a sub-block-based merge flag indicating that the sub-block merge mode applies to the target block.

In a step 1702, the encoder 130 signals the syntax element representing the sub-block-based MMVD.

In a step 1703, the encoder 130 signals the bilateral matching (BM) merge flag.

In a step 1704, the decoder 130 signals the syntax element representing the sub-block-based merge index.

In a step 1705, the encoder 130 encodes the target block.

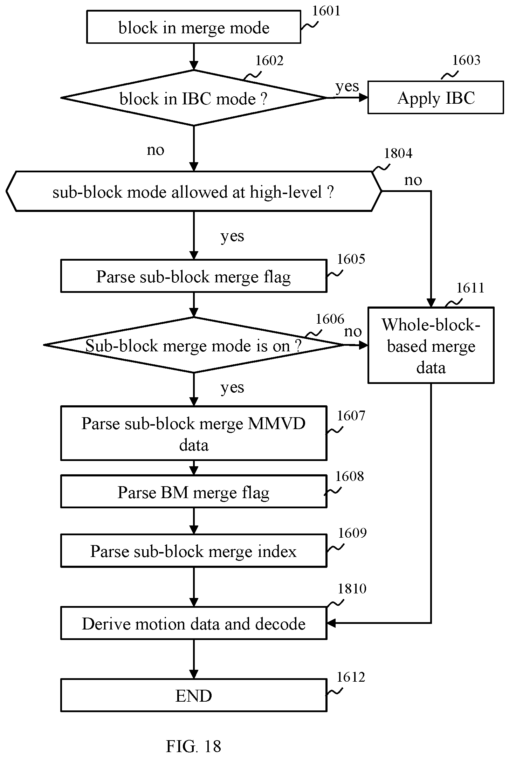

**FIG. 18** illustrates an implementation of a bitstream parsing process applied to a block in merge mode according to an embodiment.

Again, the process of FIG. 18 is for instance executed by the decoder 130 of the system 100 when the system 100 implements the system 13. The decoder 130 implements for instance the decoding process illustrated in FIG. 4 modified according to the present embodiment.

As can be seen, the process of **FIG. 18** differs from the process of FIG. 16 in that step 1604 is replaced by a new step 1804 and step 1610 is replaced by a step 1810. In step 1804, no size constraint in the sub-block merge mode usage is employed. Thus, the sub-block merge mode is allowed for any block, as soon as the sub-block merge mode is allowed at high level. As a consequence, the sub-block-merge mode flag is parsed by the decoder 130 for all blocks in inter merge mode, as soon as this mode is activated at picture level.

Regarding the signaling process executed by the encoder 130, only the condition to apply the process of FIG. 17 is changed. Indeed, the process of FIG. 17 is applied once the encoding module 130 has determined that a target block is not encoded IBC mode and that the same conditions as the conditions of step 1804 are fulfilled. Then the process of FIG. 17 is applied if the encoder 130 determines that the sub-block merge mode applies to the target block.

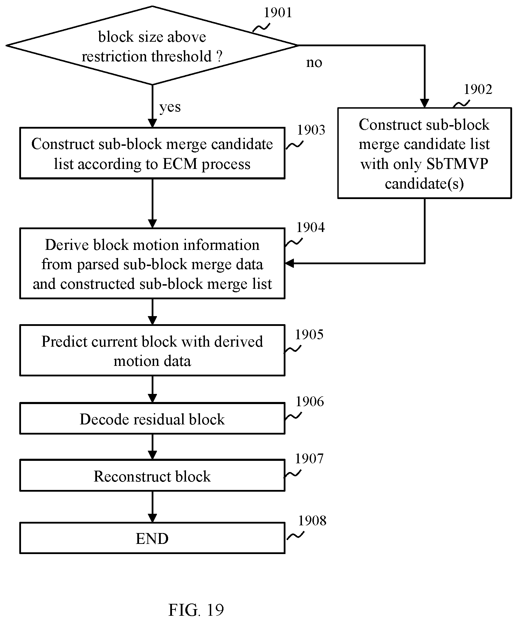

**FIG. 19** details step 1810.

The process of FIG. 19 is applied when the decoder 130 knows that the sub-block merge mode applies to the target block.

In a step 1901, the decoder 130 checks if the block size conforms to previous implementations' constraints for the usage of sub-block merge mode. We have seen from the above that some implementations, the block size has to be at least "8" in width and height to allow the sub-block merge mode. In JVET-AI0169, the block area needs to comprise at least "32" luma samples.

If previous implementations' constraints on the block size to allow the sub-block merge mode are fulfilled, step 1901 is followed by a step 1903.

During step 1903, the decoder 130 constructs the sub-block-based merge mode candidate as in previous implementations. That is, the merge list contains the SbTMVP candidate(s) and Affine merge candidates. In the case of VVC, one single SbTMVP candidate is considered. In ECM, several SbTMVP candidates may be used.

If previous implementations' constraints on the block size to allow the sub-block merge mode is not fulfilled, step 1901 is followed by a step 1902. During step 1902, the decoder 130 constructs a sub-block-based merge list dedicated to small blocks according to present embodiment. This sub-block-based merge list is made of SbTMVP candidates only, i.e. without any affine candidate.

In an embodiment, the maximum number of candidates allowed in the sub-block-based merge list dedicated to small blocks may be different from the maximum number of candidates in the usual sub-block-based merge list.

Steps 1903 and 1904 are followed by a step 1904 during which the decoder 130 derives the target block's motion information from parsed sub-block merge data and constructed sub-block-based merge list.

In a step 1905, the decoder 130 applies a prediction step to the target block using the derived motion information to obtain at least one predictor block.

In a step 1906, the decoder 130 reconstructs a residual block for the target block.

In a step 1907, the decoder 130 reconstructs the block using the at least one predictor block and the residual block.

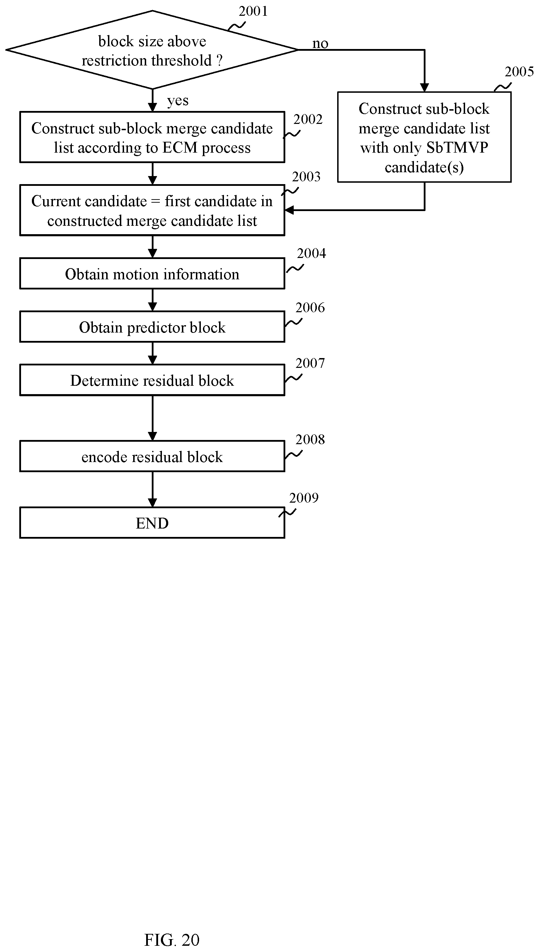

**FIG. 20** details step 1705 according to an embodiment. The input to the process is a block to code in sub-block merge mode, and its associated signaled motion information under the form of the signaled merge data as in FIG. 17.

In a step 2001, the encoder 130 checks if the block size conforms to previous implementations' constraints for the usage of sub-block merge mode. We have seen from the above that for some implementations, the block size has to be at least "8" in width and height to allow the sub-block merge mode. In JVET-AI0169, the block area needs to comprise at least "32" luma samples.

If previous implementations' constraints on the block size to allow the sub-block merge mode are fulfilled, step 2001 is followed by a step 2002.

During step 2002, the encoder 130 constructs the sub-block-based merge mode candidate as in previous implementations. That is, the merge list contains the SbTMVP candidate(s) and Affine merge candidates. In the case of VVC, one single SbTMVP candidate is considered. In ECM, several SbTMVP candidates may be used.

If previous implementations' constraints on the block size to allow the sub-block merge mode is not fulfilled, step 2001 is followed by a step 2005. During step 2005, the encoder 130 constructs a sub-block-based merge list dedicated to small blocks according to the present embodiment. This sub-block-based merge list is made of SbTMVP candidates only, i.e. without any affine candidate.

Next, the encoder 130 obtains in a step 2004 the motion information of current block based on the constructed sub-block merge candidate list, and based on the merge data of current block signaled in FIG17, which are the sub-block merge MMVD data, the BM merge flag and the sub-block merge index. With this data the motion information of current block is obtained.

In a step 2006, the encoder 130 computes the temporal prediction of current block with obtained motion information and then the resulting residual block in a step 2007.

Finally, the encoder 130 encodes the obtained residual block.

In an embodiment, the maximum number of candidates allowed in the sub-block-based merge list dedicated to small blocks may be different from the maximum number of candidates in the usual sub-block-based merge list.

In a variant of the embodiment of FIG. 18, 19 and 20 where only one SbTMVP candidate is considered for the construction of the sub-block-based merge list, the sub-block-based merge index syntax element is not signaled by the encoder 130 in the bit-stream in step 1704 nor parsed by the decoder 130 in step 1609 in the case of a small block in sub-block merge mode. On the contrary, the sub-block-based merge index is inferred to "0" instead.

In an alternative embodiment, the way to allow SbTMVP motion information representation in the case of small blocks is achieved in a different way compared to the embodiment of FIG. 18, 19 and 20.

Namely, in the alternative embodiment, in the case of a small blocks (smaller than "8" in width or height, or smaller than "32" luma samples), the SbTMVP candidates are no more included in a dedicated sub-block-based merge list but are rather inserted into the regular (of whole-block-based) merge candidate list.

Therefore, the present embodiment implies a modified whole-block merge candidate list construction process, which is applied identically at decoder 130 and encoder 130 sides.

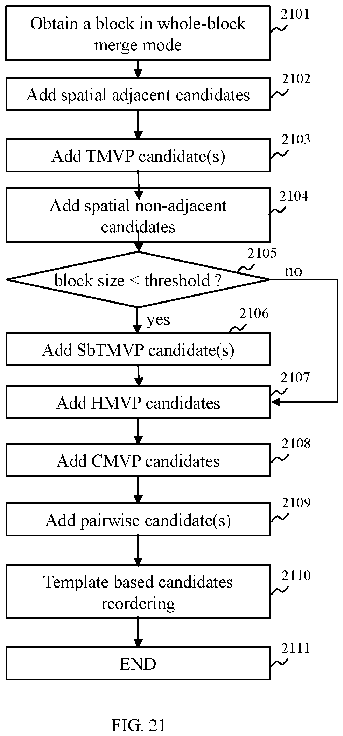

FIG. 21 shows a whole-block candidate merge list construction process according to the alternative embodiment.

The process of FIG. 21 is for instance executed by the decoder 130 of the system 100 when the system 100 implements the system 13 or by the encoder 130 of the system 100 when the system 100 implements the system 11. The decoder 130 implements the process of FIG. 4 modified according to the present embodiment. The encoder 130 implements the process of FIG. 3 modified according to the present embodiment. In the following, only an execution by the decoder 130 is described. The execution by the encoder 130 is identical.

In a step 2101, the decoder 130 obtains a target block in whole-block merge mode.

In a step 2102, the decoder 130 adds spatial adjacent merge candidate in the whole-block candidate merge list, i.e., a list of candidates for the target block.

In a step 2103, the decoder 130 adds TMVP candidates to the whole-block candidate merge list.

In a step 2104, the decoder 130 adds spatial non-adjacent candidates to the whole-block candidate merge list.

In a step 2105, the decoder 130 determines if the sub-block merge mode is allowed for the target block. If the current block size is too small (for instance, the block size is below "8") for the sub-block merge mode to be allowed for target block, then, in a step 2106, the SbTMVP candidates are added to the whole-block candidate merge list under construction. Step 2106 is followed by a step 2107.

Otherwise, if the sub-block merge mode is allowed, then no SbTMVP candidate is inserted into the whole-block candidate merge list and step 2105 is followed directly by step 2107.

In step 2107, HMVP candidates are added to the whole-block candidate merge list.

In a step 2108, CMVP candidates are added to the whole-block candidate merge list. The chained motion vector prediction (CMVP) candidates were recently introduced as one of merge candidates in ECM.

In a step 2109, pairwise candidates are added to the whole-block candidate merge list.

In a step 2110, candidates of the whole-block candidate merge list are reordered based on an ARMC-TM (Adaptive reordering of merge candidates with template matching) process described in section 3.2.16 of ECM.

The construction of the whole-block candidate merge list is followed by the encoding (on the encoder 130 side) or the decoding (on the decoder 130 side) of the target block.

In a variant of the alternative embodiment, the TMVP candidates are simply replaced by SbTMVP candidates in the case of small blocks (i.e., in case the target block size is below the threshold).

In another variant of the alternative embodiment, some redundancy check between TMVP and SbTMVP candidates are applied to avoid duplicate motion vector prediction candidates between TMVP and SbTMVP.

In yet another variant of the alternative embodiment, when a SbTMVP candidate contains several sub-blocks with different motion vectors, the SbTMVP candidate is transformed into a whole-block based candidate, which contains exactly one motion vector associated to each inter direction, i.e. to each reference picture list. To do so: a first motion vector contained in the target block may be considered as the only motion vector of the whole target block; Alternatively, the motion vector associated to a largest sub-block inside the target block may be considered as the only MV of the whole target block; Alternatively, the most represented MV in the target block may be considered as the only MV of the target block; In a last variant, for each MV contained in the SbTMVP candidate, a whole-block MV prediction candidate may be formed based on this MV, leading to several whole-block merge candidates added to the regular merge list.

According to a further variant, the proposed SbTMVP mode for small block mechanism of FIGS. 18, 19, 20 and 21 may normatively be activated/deactivated by means of a dedicated sequence parameter set (SPS) signaling flag.

According to a further variant, the proposed SbTMVP mode for small block mechanism of FIGS. 18, 19, 20 and 21 may normatively be activated/deactivated by means of a dedicated picture parameter set (PPS) signaling flag.

According to a further variant, the proposed SbTMVP mode for small block mechanism of FIGS. 18, 19, 20 and 21 may normatively be activated/deactivated by means of a dedicated picture header syntax element.

According to a further variant, the proposed SbTMVP mode for small block mechanism of FIGS. 18, 19, 20 and 21 may normatively be activated/deactivated by means of a dedicated slice header syntax element.

According to a further variant, the proposed SbTMVP mode for small block mechanism of FIGS. 18, 19, 20 and 21 may normatively be activated/deactivated by means of a dedicated sub-picture level syntax element.

According to a further variant, the proposed SbTMVP mode for small block mechanism of FIGS. 18, 19, 20 and 21 may normatively be activated/deactivated by means of a dedicated CTU (coding tree unit) level syntax element.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

> i. session description protocol (SDP), for example as described in RFCs and/or used in conjunction with real-time transport protocol (RTP) transmission.
>
> ii. hypertext transfer protocol (HTTP) live Streaming (HLS) manifest transmitted over HTTP.
>
> iii. dynamic adaptive streaming over HTTP (DASH) media presentation description (MPD) descriptors, for example as used in DASH and transmitted over HTTP.
>
> iv. RTP header extensions, for example as used during RTP streaming.
>
> v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method comprising:

   obtaining(1601) video data representing an inter block in merge mode; and,
   applying a parsing process to the video data, wherein the parsing process comprises parsing (1605) a sub-block-based merge flag indicating that a sub-block merge mode applies to the inter block responsive to a condition is fulfilled (1804), the condition being independent of a size of the inter block.

2. The method of claim 1 wherein, responsive to the condition is fulfilled, a process for constructing (1902, 1903) a list of sub-block merge candidates is applied, the sub-block merge list comprising only SbTMVP candidates or SbTMVP candidates and affine merge candidates responsive to a condition based on the size of the inter block.

3. The method of claim 2 wherein the sub-block merge list comprises only SbTMVP candidates responsive to the size of the inter block is below a value.

4. The method of claim 2 or 3 wherein, responsive to the size of the inter block is below the value and responsive to a single SbTMVP candidate is present in the sub-block merge list, no syntax element representing a sub-block merge index is parsed from the video data and the sub-block merge index is inferred to zero.

5. A method comprising:

   obtaining (2101) an inter block in whole-block merge mode; and,
   applying a process for generating list of candidates for prediction of motion information of the inter block comprising:
   adding (2106) at least one SbTMVP candidate to the list responsive to a condition based on a size of the inter block.

6. The method of claim 5 wherein the at least one SbTMVP candidate is added to the list responsive to a size of the inter block is below a value.

7. The method of claim 5 or 6 wherein the added at least one SbTMVP candidate replaces TMVP candidates in the list.

8. The method of claim 5 or 6 wherein a process to check a redundancy between the added at least one SbTMVP candidate and TMVP candidates is applied to cancel redundant SbTMVP candidate from the list.

9. The method of any previous claim from claim 5 to 8 wherein responsive to a SbTMVP candidate contains several sub-blocks with different motion vectors, the SbTMVP candidate is transformed into a whole-block based candidate, which contains exactly one motion vector associated to each inter direction.

10. The method of any previous claims from claim 5 to 9 wherein the method is applied in a method for encoding video data or in a method for decoding video data.

11. A method comprising:

    obtaining an inter block to be encoded in merge mode; and,
    applying a signaling process to signal the inter block in video data, wherein the signaling process comprises signaling (1701) a sub-block-based merge flag indicating that a sub-block merge mode applies to the inter block responsive to a condition is fulfilled (1804), the condition being independent of a size of the inter block.

12. A device comprising electronic circuitry adapted for:

> obtaining(1601) video data representing an inter block in merge mode; and,
> applying a parsing process to the video data, wherein the parsing process comprises parsing (1605) a sub-block-based merge flag indicating that a sub-block merge mode applies to the inter block responsive to a condition is fulfilled (1804), the condition being independent of a size of the inter block.

13. A device comprising electronic circuitry configured for:

> obtaining (2101) an inter block in whole-block merge mode; and,
> applying a process for generating list of candidates for prediction of motion information of the inter block comprising:
> adding (2106) at least one SbTMVP candidate to the list responsive to a condition based on a size of the inter block.

14. A device comprising electronic circuitry configured for:

> obtaining an inter block to be encoded in merge mode; and,
> applying a signaling process to signal the inter block in video data, wherein the signaling process comprises signaling (1701) a sub-block-based merge flag indicating that a sub-block merge mode applies to the inter block responsive to a condition is fulfilled (1804), the condition being independent of a size of the inter block.

15. Non-transitory information storage medium storing program code instructions for implementing the method according to any previous claim from claim 1 to 11.

FIG. 1A

FIG. 1B

FIG. 2

FIG. 3

EP 4 730 786 A1

ENTROPY DECODER 430

IMAGE PARTITIONER 435

INVERSE QUANTIZER 440

INVERSE TRANSFORMER 450

RECONSTRUCTED RESIDUAL BLOCKS

455

PREDICTION BLOCKS

RECONSTRUCTED BLOCKS

PREDICTION ENHANCER 490

INTRA PREDICTOR 460

470

MOTION COMPENSATOR 475

REFERENCE PICTURE BUFFER 480

IN-LOOP FILTERS 465

RECONSTRUCTED VIDEO

400

FIG. 4

$B_2$

$B_1$ $B_0$

$A_1$

$A_0$

500

FIG. 5A

C

500

H

FIG. 5B

FIG. 6

FIG. 7A

FIG. 7B

FIG. 8

FIG. 9

$(x_0, y_0)$                                                                                                $(x_1, y_1)$

$\overrightarrow{v_0}$                                                                                        $\overrightarrow{v_1}$

$(x_2, y_2)$        $(x_3, y_3)$                                          Curr

$\overrightarrow{v_2}$            $\overrightarrow{v_3}$

$\overrightarrow{v_4}$        A

$(x_4, y_4)$

FIG. 10

| B2 | B3 | | B1 | B0 |

A2

Curr

A1

A0        T

FIG. 11

$B_1$ $B_0$

$A_1$

$A_0$

1210

FIG. 12

1200

120

$A_1$

1210

121

FIG. 13

FIG. 14

FIG. 15

block in merge mode — 1601

↓

block in IBC mode ? — 1602 — yes → Apply IBC — 1603

↓ no

sub-block mode allowed at high-level && block width ≥ 8 && block height ≥ 8 ? — 1604 — no

↓ yes

Parse sub-block merge flag — 1605

↓

Sub-block merge mode is on ? — 1606 — no → Whole-block-based merge data — 1611

↓ yes

Parse sub-block merge MMVD data — 1607

↓

Parse BM merge flag — 1608

↓

Parse sub-block merge index — 1609

↓

Derive motion data and decode — 1610

↓

END — 1612

FIG. 16

signal sub-block merge flag _~_ 1701

signal sub-block merge MMVD data _~_ 1702

signal BM merge flag _~_ 1703

signal sub-block merge index _~_ 1704

encode _~_ 1705

END _~_ 1706

FIG. 17

FIG. 18

block size above
restriction threshold ?    1901

no

yes

Construct sub-block merge candidate
list according to ECM process    1903

Construct sub-block
merge candidate list
with only SbTMVP
candidate(s)    1902

Derive block motion information
from parsed sub-block merge data
and constructed sub-block merge list    1904

Predict current block with derived
motion data    1905

Decode residual block    1906

Reconstruct block    1907

END    1908

FIG. 19

FIG. 20

Obtain a block in whole-block merge mode — 2101

Add spatial adjacent candidates — 2102

Add TMVP candidate(s) — 2103

Add spatial non-adjacent candidates — 2104

block size < threshold ? — 2105

no

yes — 2106

Add SbTMVP candidate(s)

Add HMVP candidates — 2107

Add CMVP candidates — 2108

Add pairwise candidate(s) — 2109

Template based candidates reordering — 2110

END — 2111

FIG. 21

| | Europäisches Patentamt European Patent Office Office européen des brevets | **EUROPEAN SEARCH REPORT** | **Application Number** EP 24 30 6704 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/116645 A1 (JANG HYEONGMOON [KR] ET AL) 14 April 2022 (2022-04-14) | 1,2,4,5, 7,8 | INV. H04N19/119 |
| A | * paragraph [0001] - paragraph [0292] * * figures 1-19 * | 3,6,9 | H04N19/176 H04N19/467 |
| | ----- | | H04N19/503 |
| X | US 2023/388485 A1 (GAO HAN [US] ET AL) 30 November 2023 (2023-11-30) | 1,2,4,5, 7,8, 10-15 | H04N19/51 H04N19/52 H04N19/55 |
| A | * paragraph [0001] - paragraph [0226] * * figures 1-22 * | 3,6,9 | H04N19/70 |
| | ----- | | |
| X | YU (ERICSSON) R ET AL: "Non-CE4: On maximum number of subblock merge candidates", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O0220 ; m48330 24 June 2019 (2019-06-24), XP030218889, Retrieved from the Internet: URL:http://phenix.int-evry.fr/jvet/doc_end _user/documents/15_Gothenburg/wg11/JVET-O0 220-v1.zip JVET-O0220.docx [retrieved on 2019-06-24] | 1,2,4, 11-15 | |
| A | * page 1; figure 3 * | 3,5-10 | **TECHNICAL FIELDS SEARCHED (IPC)** H04N |
| | ----- | | |
| X | US 2021/227206 A1 (CHIU CHIH-YAO [TW] ET AL) 22 July 2021 (2021-07-22) | 1,2,4,5, 7,8, 10-15 | |
| A | * paragraph [0001] - paragraph [0108] * * figures 1-12 * | 3,6,9 | |
| | ----- | | |

The present search report has been drawn up for all claims

| Place of search | Date of completion of the search | Examiner |
|---|---|---|
| Munich | 1 April 2025 | Ernst, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6704

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | | Publication date | Patent family member(s) | | Publication date |
|---|---|---|---|---|---|
| US 2022116645 | A1 | 14-04-2022 | AU | 2020294374 A1 | 17-02-2022 |
| | | | AU | 2024200410 A1 | 08-02-2024 |
| | | | CN | 114258676 A | 29-03-2022 |
| | | | EP | 3975556 A1 | 30-03-2022 |
| | | | JP | 7520899 B2 | 23-07-2024 |
| | | | JP | 2022538069 A | 31-08-2022 |
| | | | KR | 20210158402 A | 30-12-2021 |
| | | | US | 2022116645 A1 | 14-04-2022 |
| | | | US | 2023254503 A1 | 10-08-2023 |
| | | | US | 2024414367 A1 | 12-12-2024 |
| | | | WO | 2020256454 A1 | 24-12-2020 |
| US 2023388485 | A1 | 30-11-2023 | CN | 118648286 A | 13-09-2024 |
| | | | EP | 4533796 A1 | 09-04-2025 |
| | | | KR | 20240054307 A | 25-04-2024 |
| | | | US | 2023388485 A1 | 30-11-2023 |
| | | | US | 2024364873 A1 | 31-10-2024 |
| | | | WO | 2023229665 A1 | 30-11-2023 |
| US 2021227206 | A1 | 22-07-2021 | TW | 202139702 A | 16-10-2021 |
| | | | US | 2021227206 A1 | 22-07-2021 |

EPO FORM P0459

For more details about this annex : see Official Journal of the European Patent Office, No. 12/82

**Non-patent literature cited in the description**

- JVET-AH2025: Algorithm description of Enhanced Compression Model 13 (ECM 13) / Joint Video Experts Team (JVET) of ITU-T SG 16 WP 3 and ISOIIEC JTC 1/SC 29. *34th Meeting, Rennes, FR*, 17 April 2024

- **JIANLE CHEN,** ; **YAN YE** ; **SEUNG HWAN KIM**. JVET-T2002-v2: Algorithm description for Versatile Video Coding and Test Model 11 (VTM 11), Joint Video Experts Team (JVET) of ITU-T SG 16 WP 3 and ISOIIEC JTC 1/SC 29. *20th Meeting, by teleconference*, 07 October 2020
- **FAN WANG** ; **YUE YU** ; **HAOPING YU** ; **DONG WANG**. Non-EE2: On sub-block merge mode. *OPPO, 35th Meeting, Sapporo, JP*, 12 July 2024